# EUROPÄISCHE PATENTSCHRIFT

(11) **EP 1 686 303 B1**
(45) Veröffentlichungstag und Bekanntmachung des Hinweises auf die Patenterteilung: **16.01.2019**
(21) Anmeldenummer: 05003594.8
(22) Anmeldetag: 18.02.2005
(51) Int. Cl.: F16L 23/04, F16J 15/06

(54) **Lösbare Verbindung von Profilbauteilen mit Zentrierringen**
Dismountable connection of profile components with centering rings
Raccord démontable pour éléments profilés avec anneau de centrage

(30) Priorität: 01.02.2005 DE 202005001616 U
(43) Veröffentlichungstag der Anmeldung: 02.08.2006
(73) Patentinhaber: ROTH-TECHNIK AUSTRIA Gesellschaft m.b.H., 3193 St.Aegyd a.N. (AT)
(72) Erfinder: Böhm, Markus, 76571 Gaggenau (DE)
(74) Vertreter: Wiedemann, Markus

(56) Entgegenhaltungen:
- EP-A- 1 400 739
- WO-A-2005/001323
- DE-U1- 9 103 511
- GB-A- 1 048 377
- US-A- 1 758 886

## Beschreibung

### Stand der Technik

Die Erfindung geht aus von Gehäuseschalen von Schalldämpfern, Rußfiltern, Katalysatoren oder von Kraftstofftanks von Fahrzeugen, welche durch eine lösbare Verbindung miteinander verbunden sind, gemäß dem Oberbegriff von Anspruch 1.

Aus DE 102 43 644 A1 sind gattungsgemäße Gehäuseschalen von Schalldämpfern, Rußfiltern, Katalysatoren oder von Kraftstofftanks von Fahrzeugen bekannt, welche durch eine lösbare Verbindung miteinander verbunden sind, bei welcher eine Gehäuseschale einen umlaufenden Zentrierkragen aufweist, welcher die andere Gehäuseschale untergreift. Zum Lösen der Verbindung muss dann unter anderem die eine Gehäuseschale gegenüber der anderen Gehäuseschale in axialer Richtung bzw. in Längsrichtung verschoben werden. Aufgrund beengter Bauraumverhältnisse bei Gehäuseschalen von Schalldämpfern, Rußfiltern, Katalysatoren oder von Kraftstofftanks von Fahrzeugen kann es allerdings vorkommen, dass eine solche Axialbewegung eingeschränkt bzw. überhaupt nicht möglich ist.

### Aufgabe der Erfindung

Der Erfindung liegt demgegenüber die Aufgabe zugrunde, Gehäuseschalen von Schalldämpfern, Rußfiltern, Katalysatoren oder von Kraftstofftanks von Fahrzeugen, welche durch eine lösbare Verbindung miteinander verbunden sind, derart weiter zu entwickeln, dass ein Austausch einzelner Gehäuseschalen auf einfache Weise möglich ist.

Diese Aufgabe wird erfindungsgemäß durch die Merkmale von Anspruch 1 gelöst.

### Offenbarung der Erfindung

Erfindungsgemäß ist vorgesehen, dass die lösbare Verbindung wenigstens einen Zentrierring beinhaltet, wobei sich jeweils zwei Gehäuseschalen in einer Fügeebene einander über einen Zentrierring indirekt kontaktieren und wobei der Zentrierring ein von den beiden Gehäuseschalen getrenntes, separates Bauteil darstellt, welcher einen an einer radial inneren Umfangsfläche des Endes der einen Gehäuseschale zur Anlage vorgesehenen inneren Zentrierkragen, einen den stirnseitigen Flächen der Enden der Gehäuseschalen zwischengeordneten Mittelabschnitt sowie einen an der radial äußeren Umfangsfläche des Endes der anderen Gehäuseschale zur Anlage vorgesehenen äußeren Zentrierkragen umfasst, wobei bezogen auf den Umfang des Zentrierrings der äußere Zentrierkragen eine derartige Umfangsausnehmung aufweist, dass zu Montage- und Demontagezwecken die eine Gehäuseschale gegenüber der anderen Gehäuseschale entlang der Fügeebene bewegbar ist.

Die Umfangsausnehmung oder Umfangsbegrenzung des äußeren Zentrierkragens ermöglicht, dass die Gehäuseschalen zur Montage und zum Lösen der lösbaren Verbindungen entlang der Fügeebenen und ohne Axialbewegung relativ zueinander bewegt werden können, indem beispielsweise das Ende einer Gehäuseschale, an deren äußerer Umfangsfläche ein äußerer Zentrierkragen anliegt durch die Umfangsausnehmung hindurch gezogen wird. Zugleich reicht der im Umfang begrenzte äußere Zentrierkragen aus, um die Gehäuseschalen in Einbaulage gegeneinander zu zentrieren. Wenn dann die Gehäuseschalenenden radial außen zusätzlich von einem Spannmittel übergriffen sind, ergibt sich eine äußerst steife Verbindung, welche erlaubt, dass mehrere Gehäuseschalen, beispielsweise Gehäuseschalen von Abgasschalldämpfern frei auskragend angeordnet werden können.

Dass der wenigstens eine Zentrierring ein von den Gehäuseschalen getrenntes, separates Bauteil darstellt, bedingt eine einfache Konstruktion und Montage, da der Zentrierring nicht mit einem Gehäusebauteil beispielsweise durch Schweißung verbunden werden muss, sondern lediglich durch Einlegen des inneren Zentrierkragens in eine Gehäuseschale und Quereinschub einer anderen Gehäuseschale montiert werden kann.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt weisen die Gehäuseschalen und die Zentrierringe einen kreisförmigen Querschnitt auf und der äußere Zentrierkragen erstreckt sich bezogen auf den Umfang eines Zentrierrings bis höchstens über den halben Umfang des Zentrierrings.

Gemäß einer besonders zu bevorzugenden Ausführungsform sind die Mantelwände der Gehäuseschalen zumindest teilweise je doppelwandig ausgebildet und weisen zwei mit Abstand im wesentlichen parallel zueinander verlaufende Wände auf, wobei eine innere Wand wenigstens einer Gehäuseschale am Gehäuseschalenende eine nach innen ragende Einrollung oder Bördelung aufweist, welche eine äußere Wand kontaktiert. Zusätzlich kann auch die äußere Wand wenigstens einer Gehäuseschale mit einer nach außen ragenden Bördelung oder Einrollung versehen sein.

Die Bördelungen oder Einrollungen können dann den flachen Mittelabschnitt des Zentrierrings entlang einer Linie kontaktieren und sind auf einfache und günstige Weise durch Rollieren herstellbar. Darüber hinaus sind sie wegen ihrer hohen Gestaltsteifigkeit oder Formstabilität relativ unempfindlich gegenüber mechanischen Einwirkungen. Weiterhin ist die Lage der Berührungslinie für die Dichtfunktion nicht von Bedeutung, so dass die erfindungsgemäße Verbindung fehlertolerant ist. Dies ist gerade bei Bauteilen von Abgasanlagen von Kraftfahrzeugen von besonderem Vorteil, welche fertigungsbedingt relativ große Toleranzen aufweisen.

Außerdem ist wegen der Linienberührung eine äußerst kleine Kontaktfläche zwischen den Gehäuseschalen und den Mittelabschnitten der Zentrierringe vorhanden ist, so dass wegen der reduzierten Kontaktfläche weniger Tendenz besteht, dass die Elemente aufgrund von Kontaktkorrosion zusammenhaften und sich nur schwer oder überhaupt nicht mehr voneinander lösen lassen.

Damit erfüllen die Bördelungen oder Einrollungen eine Mehrfachfunktion, indem sie einerseits die bereits erwähnte, vorteilhafte Linienberührung sicherstellen, als Dichtflächen wirken, den Zwischenraum zwischen den beiden Wänden verschließen und die Formsteifigkeit der Gehäuseschalenenden erhöhen, da sie als Stützkörper die eine Wand gegen die andere Wand abstützen. Diese Art der Doppelwandverbindung ist außerdem äußerst kostengünstig zu realisieren.

Weiterhin kann der Mittelabschnitt eines Zentrierrings beidseitig mit je einer zur Anlage an einer Bördelung oder Einrollung einer Gehäuseschale vorgesehenen Dichtung versehen sein. Damit dient der Zentrierring zugleich auch als Dichtungsträger. Dabei kann der flache Mittelabschnitt eines Zentrierrings in der im wesentlichen radialen Fügeebene der P Gehäuseschalen verlaufen und die Einrollungen oder Bördelungen, insbesondere die nach außen ragenden Einrollungen oder Bördelungen der äußeren Wände linienartig kontaktieren. Durch die Linienberührung im Kontaktbereich zwischen den Dichtungen und den Einrollungen oder Bördelungen bildet sich eine Dichtkante aus, welche aufgrund der relativ hohen Pressung entlang der Kontaktlinie besser dichtet wie dies etwa bei einer flächigen Berührung der Fall ist. Die Ausbildung einer Dichtkante ist insbesondere bei Verwendung von elastischen Dichtungen von Vorteil, weil wegen der höheren Pressung im Dichtspalt kleinere Spannkräfte ausreichen. Als Dichtelemente können günstige, handelsübliche Formdichtungen wie Flachdichtungen verwendet werden.

Weil solche doppelwandigen Gehäuseschalen mit zwischen den Wänden angeordnetem Dämmmaterial (Integraldämmung) bevorzugt als Gehäuseschalen von Schalldämpfern, Rußfiltern und Katalysatoren von Fahrzeugen mit Brennkraftmaschinen verwendet werden und dort die Dichtigkeit der Verbindung eine wesentliche Rolle spielt, ist diese Eigenschaft besonders vorteilhaft.

Die mit inneren und/oder äußeren Bördelungen oder Einrollungen am Gehäuseschalenende versehenen Gehäuseschalen sind außerdem in vorteilhafter Weise nach Art eines Baukastens jeweils untereinander beliebig kombinierbar, weil die Kontaktflächen jeweils identisch ausgebildet sind und in jedem Fall eine Linienberührung gegeben ist.

Um zwei Gehäuseschalenenden fest miteinander zu verbinden, sind vorzugsweise die nach außen weg ragenden Bördelungen oder Einrollungen der äußeren Wände der Gehäuseschalenenden durch Übergriff eines Spannmittels, beispielsweise eines handelsüblichen Spannbandes mit kegelstumpfförmigem Querschnitt gegeneinander gespannt. Durch Verkürzen des entlang einer Fügeebene der Gehäuseschalen verlaufenden Spannbandes werden die im wesentlichen kreisrunden Einrollungen oder Bördelungen in den kegelförmigen Querschnitt des Spannbandes gedrückt, wodurch die beiden betroffenen Gehäuseschalen gegeneinander gespannt und miteinander formschlüssig verbunden werden.

Bei mehreren Gehäuseschalen ist bevorzugt jeweils zwei Gehäuseschalen ein Zentrierring zwischengeordnet. Bei drei Gehäuseschalen ist beispielsweise der Mittelschale und den beiden Endschalen jeweils ein Zentrierring zwischengeordnet. Um dann eine Montage bzw. Demontage der Mittelschale ohne Axialbewegung der Endschalen zu ermöglichen, müssen die beiden Zentrierringe in einer Drehlage eingebaut werden, in welcher ihre Umfangsausnehmungen in axialer Richtung im Wesentlichen fluchten. Dann können die Enden der Mittelschale entlang der beiden Fügeebenen gleiten, wenn es radial zwischen den beiden Endschalen herausgezogen wird, ohne dass hierzu eine Axialbewegung der beiden Endschalen notwendig wäre.

Wenn bei mehreren Gehäuseschalen nur eine bestimmte axiale Einbaulage zugelassen ist und ein Einbau von Gehäuseschalen in umgeschlagener Position verhindert werden soll, was beispielsweise im Hinblick auf die Durchströmungsrichtung in Abgasanlagen von Kraftfahrzeugen eine Rolle spielt, bzw. wenn bei standardisiert ausgebildeten Gehäuseschalen lediglich eine bestimmte Montagereihenfolge zugelassen werden soll, dann können zumindest einige der Zentrierringe unterschiedliche geometrische Abmessungen aufweisen, welche unterschiedliche geometrische Abmessungen aufweisen, welche unterschiedlichen geometrischen Abmessungen der Enden der jeweils zugeordneten Profilbauteile entsprechen. Dann ist gewährleistet, dass die Profilbauteile nur in einer bestimmten Reihenfolge und Einbaulage mittels der Zentrierringe montiert werden können.

Dies kann beispielsweise dadurch realisiert sein, dass zumindest einige der Zentrierringe sich darin unterscheiden, dass die Außendurchmesser der Mittelabschnitte unterschiedlich groß sind, wobei die diesen Zentrierringen zugeordneten Profilbauteile hierzu angepasste, durch wenigstens einen Anschlag begrenzte radiale Einschubtiefen für die Mittelabschnitte aufweisen.

Zusätzlich können zumindest einige der Zentrierringe sich darin unterscheiden, dass ihre inneren Zentrierkrägen in axialer Richtung gesehen eine unterschiedliche Länge aufweisen, wobei die diesen Zentrierringen zugeordneten Profilbauteile hierzu angepasste, durch wenigstens einen Anschlag begrenzte axiale Anschlussmaße für die inneren Zentrierkrägen aufweisen

Die erfindungsgemäße Baugruppe beinhaltet insbesondere Gehäuseschalen von Schalldämpfern, Rußfiltern, Katalysatoren oder von Kraftstofftanks von Fahrzeugen.

### Zeichnungen

Ein Ausführungsbeispiel der Erfindung ist in der Zeichnung dargestellt und in der nachfolgenden Beschreibung näher erläutert. In der Zeichnung zeigt
- Fig. 1: eine Querschnittsdarstellung eines dreiteiligen Abschnitts einer Abgasanlage eines Nutzfahrzeugs als bevorzugte Ausführungsform einer Baugruppe gemäß der Erfindung;
- Fig.2: eine vergrößerte Ansicht einer ersten lösbaren Verbindung von Fig.1 in einem ersten Bereich;
- Fig.3: eine vergrößerte Ansicht der ersten lösbaren Verbindung von Fig.1 in einem zweiten Bereich;
- Fig.4: eine Stirnansicht eines in den lösbaren Verbindungen von Fig.1 verwendeten Zentrierrings;
- Fig.5: eine Seitenansicht des Zentrierrings von Fig.4;
- Fig.6: eine vergrößerte Ansicht einer zweiten lösbaren Verbindung von Fig.1.

### Beschreibung des Ausführungsbeispiels

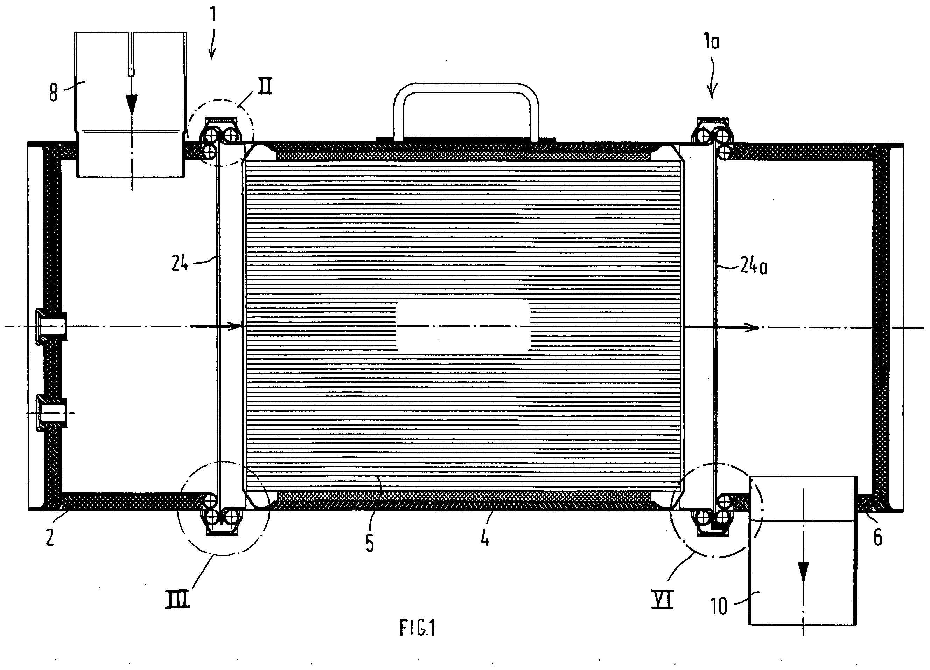

Im bevorzugten Ausführungsbeispiel nach Fig.1 dienen lösbare Verbindungen 1, 1a zur Verbindung dreier Profilbauteile, beispielsweise von drei zylindrischen Gehäuseschalen 2, 4, 6 einer Abgasanlage eines Nutzfahrzeugs, wobei von rechts nach links gesehen die erste Gehäuseschale 2 einen Vorkatalysator, die zweite oder mittlere Gehäuseschale 4 einen Partikelfilter 5 und die dritte Gehäuseschale 6 einen Nachkatalysator beinhaltet. Die erste Gehäuseschale 2 ist zudem mit einem Eingangsrohr 8 und die dritte Gehäuseschale 6 mit einem Ausgangsrohr 10 für das Abgas versehen.

Das im Partikelfilter 5 in der mittigen Gehäuseschale 4 angeordnete Substrat soll in der durch die Pfeile in Fig.1 veranschaulichten Richtung und keinesfalls in Gegenrichtung durchströmt werden. Die Gehäuseschalen 2, 4, 6 weisen endseitige Ränder auf, im folgenden auch Profilenden genannt, welche stirnseitig stoßend aneinander befestigt werden sollen. Hierzu ist die Gehäuseschale 2, welche den Vorkatalysator beinhaltet und bezüglich des Partikelfilters einen Zulauf bildet über ein erste lösbare Verbindung 1 an der Gehäuseschale 4 (Partikelfilter) und Letztere über eine zweite Verbindung 1a an der Gehäuseschale 6 lösbar befestigt, welche den Nachkatalysator trägt.

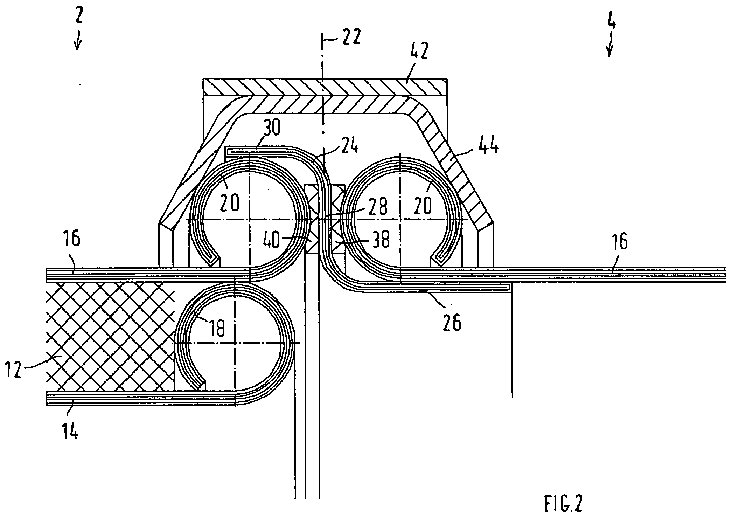

Wie insbesondere aus Fig.2 hervorgeht, in welcher exemplarisch ein oberer Bereich der lösbaren Verbindung 1 zwischen der Gehäuseschale 2 des Vorkatalysators und der Gehäuseschale 4 des Russfilters gezeigt ist, sind die Mantelwände der Gehäuseschalen 2, 4, 6 vorzugsweise je mindestens teilweise doppelwandig ausgebildet, wobei in einem Zwischenraum 12 Dämmmaterial aufgenommen ist. Solche doppelwandigen Gehäuseschalen 2, 4, 6 werden bevorzugt bei Katalysatoren, Abgasschalldämpfern und Rußfiltern verwendet. Hierbei ist eine innere Wand 14 mit Abstand und im wesentlichen parallel zu einer äußeren Wand 16 angeordnet.

Bei der gezeigten Ausführungsform ist die innere Wand 14 der Gehäuseschale 2 endseitig nach außen gerollt und bildet eine nach innen ragende Bördelung oder Einrollung 18. Dabei ist der Durchmesser der Bördelung oder Einrollung 18 derart gewählt, dass sie die gegenüberliegende äußere Wand 16 kontaktiert und folglich einen Abschluss des Zwischenraumes 12 sowie eine Wandstütze bildet. Der Kontaktbereich hat vorzugsweise die Form einer Linie. Weiterhin ist die äußere Wand 16 der Gehäuseschale 2 an ihrem Rand mit einer nach außen ragenden Bördelung oder Einrollung 20 versehen. Dabei fluchtet die äußere Bördelung oder Einrollung 20 mit der inneren Bördelung oder Einrollung 18 etwa in einer radialen Fügeebene 22 der Gehäuseschalen 2, 4.

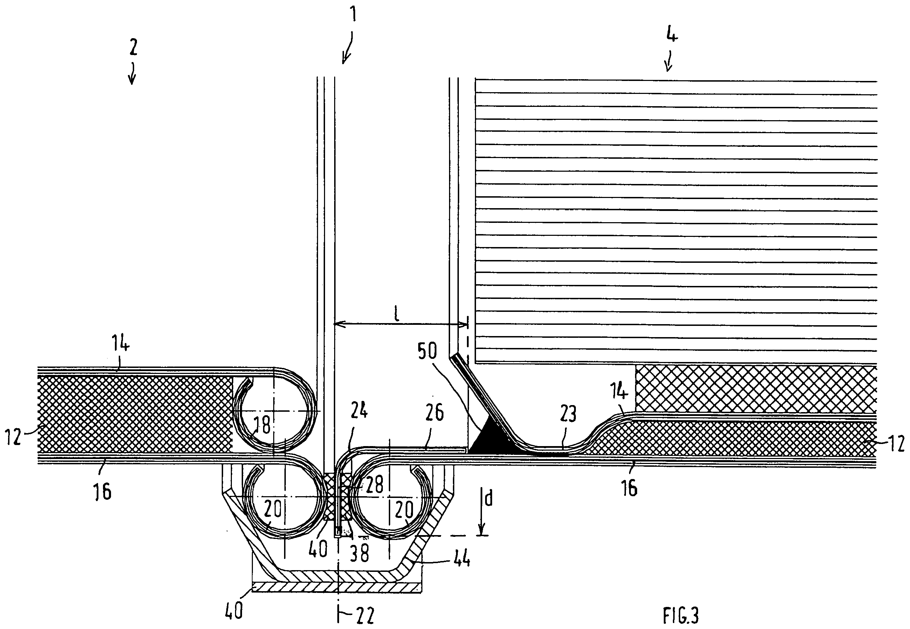

Bei der Gehäuseschale 4 ist hingegen nur die äußere Wand 16 mit einer Einrollung oder Bördelung 20 versehen, während die innere Wand 14 im Bereich des Randes der Gehäuseschale 4 eine Sicke 23 aufweist, deren Boden die äußere Wand 16 radial innen kontaktiert (Fig.3). Alternativ könnte jedoch auch die innere Wand 14 der Gehäuseschale 4 mit einer Einrollung oder Bördelung 18 versehen sein, welche an der äußeren Wand 16 anliegt.

Die Bördelungen oder Einrollungen 18, 20 beschreiben je im wesentlichen einen Vollkreis und können durch Rollieren gefertigt sein, indem die ursprünglich geraden Ränder der inneren und äußeren Wände 14, 16 kreisförmig nach hinten gebogen werden. Folglich sind die Bördelungen oder Einrollung 18, 20 beispielsweise einstückig mit der zugeordneten Wand 14, 16 der Gehäuseschale 2, 4, 6, alternativ könnten sie als separate Bauteile auch an die jeweilige Wand 14, 16 angesetzt sein. Der Durchmesser der Bördelungen oder Einrollungen 18, 20 kann fallweise angepasst werden.

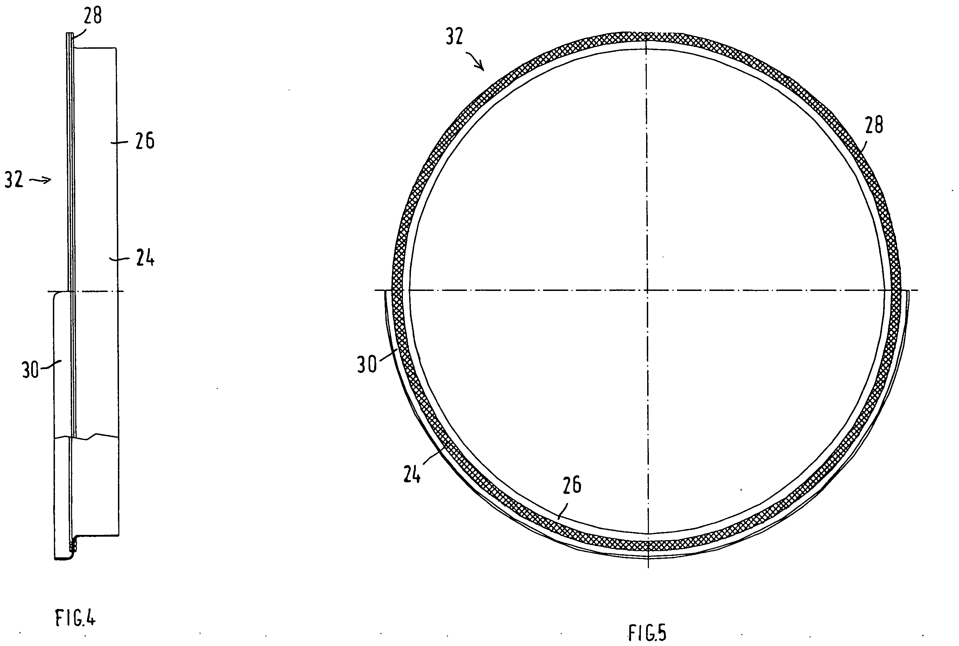

Die lösbare Verbindung 1 beinhaltet einen in den Fig.4 und Fig.5 separat gezeigten Zentrierring 24, welcher einen an einer radial inneren Umfangsfläche des Randes der einen Gehäuseschale 4 zur Anlage vorgesehenen inneren Zentrierkragen 26, einen den Rändern zwischengeordneten und vorzugsweise flachen Mittelabschnitt 28 sowie einen an der radial äußeren Umfangsfläche des Randes der anderen Gehäuseschale 2 zur Anlage vorgesehenen äußeren Zentrierkragen 30 umfasst. Weiterhin erstreckt sich der äußere Zentrierkragen 30 bezogen auf den gesamten Umfang des Zentrierrings 24 bis höchstens über den halben Umfang des Zentrierrings 24. Beide Zentrierkrägen 26, 30 sind im wesentlichen parallel zu den Mantelwänden der Gehäuseschalen 2, 4. Weiterhin weisen die Gehäuseschalen 2, 4, 6 und der Zentrierring 24 beispielsweise einen kreisförmigen Querschnitt auf.

Bei dem bevorzugten Ausführungsbeispiel liegt dann beispielsweise der innere Zentrierkragen 26 an der radial inneren Umfangsfläche der äußeren Wand 16 der Gehäuseschale 4 und der äußere Zentrierkragen 30 tangential an der Bördelung oder Einrollung 20 der äußeren Wand 16 der Gehäuseschale 2 an. Falls die innere Wand 14 der Gehäuseschale 4 auch mit einer Bördelung oder Einrollung 18 versehen ist, würde der innere Zentrierkragen 26 tangential an dieser anliegen.

Die Begrenzung des äußeren Zentrierkragens 30 auf höchstens den halben Umfang des Zentrierrings 24 ermöglicht, dass beispielsweise die Gehäuseschale 2 ohne Axialbewegung von der anderen Gehäuseschale 4 gelöst werden kann, indem sie entlang der Fügeebene 22 senkrecht zur Längserstreckung der Gehäuseschalen 2, 4 vom äußeren Zentrierkragen 30 weg, in Fig.2 und Fig.3 nach unten verschoben wird. Da in dem dem äußeren Zentrierkragen 30 gegenüberliegenden und in Fig.3 gezeigten unteren Bereich der lösbaren Verbindung 1 aufgrund der Umfangsausnehmung 32 kein äußerer Zentrierkragen 30 mehr vorhanden ist, kann die Gehäuseschale 2 ungehindert nach unten gezogen werden. Mit anderen Worten weist die Umfangserstreckung des äußeren Zentrierkragens 30 zur Montage und zum Lösen der lösbaren Verbindung 1 eine Umfangsausnehmung 32 von derartiger Größe auf, dass die von ihm kontaktierte Gehäuseschale 2 in der Fügeebene 22 ungehindert in Richtung der Umfangsausnehmung 32, d.h. in Fig.2 und Fig.3 nach unten bewegt werden kann, ohne dass die Gehäuseschale 2 hierzu in Axialrichtung, d.h. senkrecht zur Fügeebene 22 bewegt werden müsste.

Der im Umfang begrenzte äußere Zentrierkragen 30 reicht aus, um die beiden Gehäuseschalen 2, 4 in Einbaulage gegeneinander zu zentrieren. Bevorzugt erstreckt sich der äußere Zentrierkragen 30 über einen Winkel von 180 Grad auf, wie aus Fig.4 und Fig.5 hervorgeht. Alternativ könnte er sich aber auch über einen kleineren Winkel, beispielsweise über 160 Grad erstrecken, um durch seine dann trichterförmig ausgebildeten Ränder die Montage und Demontage der Gehäuseschalen 2, 4 zu erleichtern.

Zur Abdichtung des Innenraumes des Abgas führenden und durch die Gehäuseschalen 2, 4, 6 umgebenen Innenraums gegenüber der Umgebung kann der Mittelabschnitt 28 des Zentrierrings 24 beidseitig mit je einer zur Anlage an einer Bördelung oder Einrollung 20 einer Wand 16 einer Gehäuseschale 2, 4 vorgesehenen Dichtung 38, 40 versehen sein. Dabei verläuft der flache Mittelabschnitt 28 des Zentrierrings 24 in der im wesentlichen radialen Fügeebene 22 der Gehäuseschalen 2, 4 und die Dichtungen sind als Flachdichtungen 38, 40 ausgebildet, so dass sie tangential zu den kreisförmigen Umfangsflächen der Bördelungen oder Einrollungen 20 angeordnet sind und diese daher beidseitig linienhaft kontaktieren. Besonders bevorzugt sind die Dichtungen 38, 40 im Bereich der Einrollungen oder Bördelungen 20 der äußeren Wände 16 der Gehäuseschalen 2, 4 angeordnet. Gleichfalls ist jedoch auch eine Verbindung ohne zwischengeordnete Dichtungen 38, 40 denkbar, bei welcher der Mittelabschnitt 28 des Zentrierrings 24 die Einrollungen oder Bördelungen 20 direkt kontaktiert. Nicht zuletzt können die Dichtungen 38, 40 auch die Bördelungen oder Einrollungen 18, 20 der inneren und der äußeren Wände 14, 16 kontaktieren, sofern Bördelungen oder Einrollungen 18 an inneren Wänden 14 beidseitig vorhanden sind.

Die Verbindungen 1, 1a bei eingelegten Zentrierringen 24, 24a werden durch Spannmittel fixiert, vorzugsweise durch jeweils ein zylindrisches Spannband 42 mit einem radial innen angesetzten Profilabschnitt 44 mit kegelstumpfförmigem Querschnitt, dessen Mittelebene im wesentlichen in der Fügeebene 22 der Gehäuseschalen 2, 4 liegt und dessen Querschnitt sich in einer von den Gehäuseschalen 2, 4 weg weisenden Richtung verengt. Durch Verkürzen des Spannbandes 42 werden die im wesentlichen kreisrunden Einrollungen oder Bördelungen 20 der äußeren Wände 16 der Gehäuseschalen 2, 4 in den sich verengenden Querschnitt des Spannbandes 42 gedrückt, wodurch die beiden Gehäuseschalen 2,4 und insbesondere die beiden äußeren Einrollungen oder Bördelungen 20 stirnseitig gegeneinander gespannt und miteinander formschlüssig verbunden werden. Gleichzeitig wird der axiale Druck auf die Dichtungen 38, 40 erhöht, was die Dichtwirkung verbessert. Zugleich zentriert das Spannband 42 bedingt durch seinen kegelförmigen Querschnitt die beiden äußeren Einrollungen oder Bördelungen 20 gegeneinander.

Bei den drei Gehäuseschalen 2, 4, 6 der Abgasanlage ist der mittleren Gehäuseschale 4 und den beiden End-Gehäuseschalen 2, 6 jeweils ein Zentrierring 24, 24a zwischengeordnet. Um dann eine Montage bzw. Demontage der mittleren Gehäuseschale 4 ohne Axialbewegung der End-Gehäuseschalen 2, 6 zu ermöglichen, müssen die beiden Zentrierringe 24, 24a in einer Drehlage eingebaut werden, in welcher ihre Umfangsausnehmungen 32, 32a in axialer Richtung im wesentlichen fluchten. Dann können die Enden der mittleren Gehäuseschale 4 entlang der beiden Fügeebenen 22, 22a gleiten, wenn es zwischen den beiden End-Gehäuseschalen 2, 6 in radialer Richtung herausgezogen wird, ohne dass hierzu eine Axialbewegung der beiden End-Gehäuseschalen 2, 6 notwendig wäre.

Die Zentrierringe 24, 24a sind im wesentlichen gleich aufgebaut, d.h. sie weisen beide innere und äußere Zentrierkrägen 26, 26a bzw. 30, 30a, Mittelabschnitte 28, 28a sowie Ausnehmungen 32, 32a auf. Im vorliegenden Fall darf das Substrat des Partikelfilters 5 in der mittleren Gehäuseschale 4 nur in der durch die Pfeile in Fig.1 veranschaulichten Richtung durchströmt werden. Um zu verhindern, dass die mittlere Gehäuseschale 4 in demgegenüber umgeschlagener Richtung eingebaut wird, was eine unzulässige Durchströmungsrichtung des Partikelfilters 5 zur Folge hätte, weisen die beiden Zentrierringe 24, 24a jedoch unterschiedliche geometrische Abmessungen auf, welche ebenso unterschiedlichen geometrischen Abmessungen der Enden der Gehäuseschalen 2, 4, 6 entsprechen.

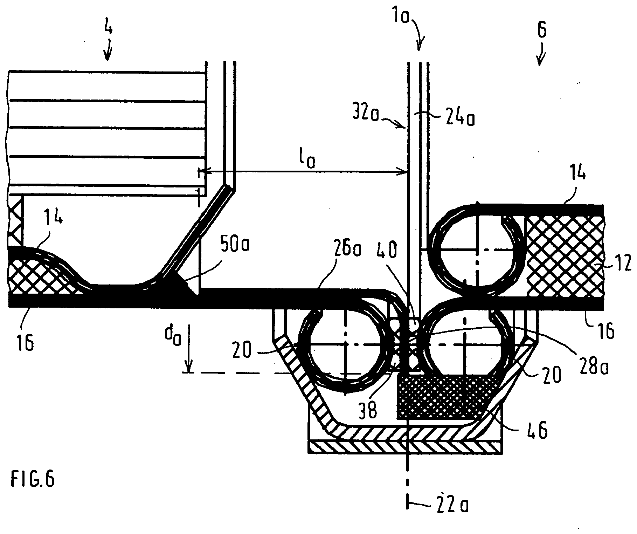

Wie aus Fig.3, in welcher die erste lösbare Verbindung 1 zwischen der Gehäuseschale 2 und der Gehäuseschale 4 gezeigt ist, und aus Fig.6, welche die zweite lösbare Verbindung 1a zwischen der Gehäuseschale 4 und der Gehäuseschale 6 darstellt, hervorgeht, kann dies beispielsweise dadurch realisiert sein, dass die beiden Zentrierringe 24, 24a sich darin unterscheiden, dass die Außendurchmesser d, dₐ der Mittelabschnitte 28, 28a unterschiedlich groß sind und die den Zentrierringen 24, 24a zugeordneten Gehäuseschalen 2, 4, 6 hierzu angepasste, beispielsweise durch wenigstens einen Anschlag begrenzte radiale Einschubtiefen für die Mittelabschnitte 28, 28a aufweisen. Genauer kann das mit dem Zentrierring 24a der zweiten lösbaren Verbindung 1a zugeordnete Ende der Gehäuseschale 6 einen radialen Anschlag 46 für den Außendurchmesser dₐ des Mittelabschnitts 28a des Zentrierrings 24a aufweisen, welcher verhindert, dass der Zentrierring 24 mit dem größeren Außendurchmesser d eingeschoben werden kann. Dieser Anschlag 48 kann in einer Ausnehmung der Bördelung 20 der äußeren Wand 16 der Gehäuseschale 6 aufgenommen sein und sich in Umfangsrichtung nur über ein kleines Stück erstrecken.

Zusätzlich können sich die beiden Zentrierringe 24, 24a darin unterscheiden, dass ihre inneren Zentrierkrägen 26, 26a in axialer Richtung gesehen eine unterschiedliche Länge l, lₐ und die den Zentrierringen 24, 24a zugeordneten Gehäuseschalen 2, 4, 6 hierzu angepasste, durch Anschläge begrenzte axiale Einschubtiefen für die Zentrierkrägen 26, 26a aufweisen. Im vorliegenden Fall ist beispielsweise die Länge l des Zentrierkragens 26 des Zentrierrings 1 (siehe Fig.3) kürzer als die Länge lₐ des Zentrierkragens 26a des Zentrierrings 1a (siehe Fig.6). Bevorzugt ist der Partikelfilter 5 bezogen auf die Längserstreckung der Gehäuseschale 4 ein Stück außermittig in der Gehäuseschale 4 platziert, wodurch unterschiedliche axiale Anschlussmaße für die inneren Zentrierkrägen 26, 26a der Zentrierringe 24, 24a verwirklicht werden. Diese Anschlussmaße werden beispielsweise durch die axiale Lage von axiale Anschläge bildenden Schweißraupen 50 bestimmt, durch welche die innere Wand 14 mit der äußeren Wand der mittleren Gehäuseschale 4 im Bereich der Stirnflächen des Partikelfilters 5 beidseitig verschweißt sind. Durch die genannten Maßnahmen wird wegen der unterschiedlichen Anschlussmaße l, lₐ bzw. d, dₐ der Zentrierringe 24, 24a bzw. der Gehäuseschalen 2, 4, 6 verhindert, dass die mittlere Gehäuseschale 4 in umgeschlagener Richtung eingebaut werden kann.

## Patentansprüche

1. Gehäuseschalen (2, 4, 6) von Schalldämpfern, Rußfiltern, Katalysatoren oder von Kraftstofftanks von Fahrzeugen, mit einer, diese verbindenden lösbaren Verbindung **dadurch gekennzeichnet, dass** die lösbare Verbindung (1, 1a) wenigstens einen Zentrierring (24, 24a) beinhaltet, wobei sich jeweils zwei Gehäuseschalen (2, 4) in einer Fügeebene (22) einander über den Zentrierring (24, 24A) indirekt kontaktieren und wobei der Zentrierring (24, 24a) ein von den beiden Gehäuseschalen (2, 4, 6) getrenntes, separates Bauteil darstellt, welcher einen an einer radial inneren Umfangsfläche des Endes der einen Gehäuseschale (2, 4, 6) zur Anlage vorgesehenen inneren Zentrierkragen (26, 26a), einen den stirnseitigen Flächen der Enden der Gehäuseschalen (2, 4, 6) zwischengeordneten Mittelabschnitt (28, 28a) sowie einen an der radial äußeren Umfangsfläche des Endes der anderen Gehäuseschale (2, 4, 6) zur Anlage vorgesehenen äußeren Zentrierkragen (30) umfasst, wobei bezogen auf den Umfang des Zentrierrings (24, 24a) der äußere Zentrierkragen (30) eine derartige Umfangsausnehmung (32, 32a) aufweist, dass zu Montage- und Demontagezwecken die eine Gehäuseschale (2, 4, 6) gegenüber der anderen Gehäuseschale (2, 4, 6) entlang der Fügeebene (22, 22a) bewegbar ist.

2. Gehäuseschalen nach Anspruch 1, **dadurch gekennzeichnet, dass** die Gehäuseschalen (2, 4, 6) und der Zentrierring (24, 24a) einen kreisförmigen Querschnitt aufweisen und sich der äußere Zentrierkragen (30) bis höchstens über den halben Umfang des Zentrierrings (24, 24a) erstreckt.

3. Gehäuseschalen nach Anspruch 1 oder 2, **dadurch gekennzeichnet, dass** Gehäuseschalenenden radial außen zusätzlich von einem Spannmittel (42) übergriffen sind.

4. Gehäuseschalen nach wenigstens einem der vorhergehenden Ansprüche, **dadurch gekennzeichnet, dass** der Mittelabschnitt (28, 28a) des Zentrierrings (24, 24a) beidseitig mit je einer zur Anlage an einer stirnseitigen Fläche eines Endes einer Gehäuseschale (2, 4, 6) vorgesehenen Dichtung (38, 40, 38a, 40a) versehen ist.

5. Gehäuseschalen nach Anspruch 4, **dadurch gekennzeichnet, dass** wenigstens ein Gehäuseschalenende eine wenigstens einen Teilkreis beschreibende Bördelung oder Einrollung (18, 20, 18a, 20a) aufweist.

6. Gehäuseschalen nach Anspruch 5, **dadurch gekennzeichnet, dass** der Mittelabschnitt (28, 28a) des Zentrierrings (24, 24a) im wesentlichen in der Fügeebene (22, 22a) der Gehäuseschalen (2, 4, 6) verläuft und die Bördelungen oder Einrollungen (18, 20) linienartig kontaktiert.

7. Gehäuseschalen nach Anspruch 6, **dadurch gekennzeichnet, dass** die Mantelwände der Gehäuseschalen (2, 4, 6) zumindest teilweise je doppelwandig ausgebildet sind und zwei mit Abstand im wesentlichen parallel zueinander verlaufende Wände aufweisen, wobei eine innere Wand (14) wenigstens einer Gehäuseschale (2, 4, 6) am Gehäuseschalenende eine nach innen ragende Einrollung oder Bördelung (18) aufweist, welche eine äußere Wand (16) kontaktiert.

8. Gehäuseschalen nach Anspruch 7, **dadurch gekennzeichnet, dass** die äußere Wand (16) wenigstens einer Gehäuseschale (2, 4,6) mit einer nach außen ragenden Bördelung oder Einrollung (20) versehen ist.

9. Gehäuseschalen nach Anspruch 8, **dadurch gekennzeichnet, dass** die Dichtungen (38, 40) den nach außen ragenden Einrollungen oder Bördelungen (20) der äußeren Wände (16) der Gehäuseschalen (2, 4) zwischengeordnet sind.

10. Gehäuseschalen nach Anspruch 9, **dadurch gekennzeichnet, dass** die nach außen ragenden Bördelungen oder Einrollungen (20) der äußeren Wände (16) durch Übergriff eines Spannmittels (42) mit kegelstumpfförmigem Querschnitt gegeneinander gespannt sind.

11. Gehäuseschalen nach einem der vorhergehenden Ansprüche, **dadurch gekennzeichnet, dass** bei mehreren Gehäuseschalen (2, 4, 6) jeweils zwei Gehäuseschalen (2 und 4, 4 und 6) ein Zentrierring (24, 24a) zwischengeordnet ist, wobei die Drehlage der Zentrierringe (24, 24a) derart ist, dass ihre Umfangsausnehmungen (32, 32a) in axialer Richtung im wesentlichen miteinander fluchten.

12. Gehäuseschalen nach Anspruch 11, **dadurch gekennzeichnet, dass** zumindest einige der Zentrierringe (24, 24a) untereinander unterschiedliche geometrische Abmessungen aufweisen, welche unterschiedlichen geometrischen Anschlussabmessungen der Enden der jeweils zugeordneten Gehäuseschalen (2, 4, 6) entsprechen.

13. Gehäuseschalen nach Anspruch 12, **dadurch gekennzeichnet, dass** zumindest einige der Zentrierringe (24, 24a) sich darin unterscheiden, dass sich ihre inneren Zentrierkrägen (26, 26a) in axialer Richtung gesehen eine unterschiedliche Länge (l₁, l₂) aufweisen, wobei die diesen Zentrierringen (24, 24a) zugeordneten Gehäuseschalen (2, 4, 6) hierzu angepasste, durch wenigstens einen Anschlag (50, 50a) begrenzte axiale Anschlussabmessungen für die inneren Zentrierkrägen (26, 26a) aufweisen.

14. Gehäuseschalen nach Anspruch 12 oder 13, **dadurch gekennzeichnet, dass** zumindest einige der Zentrierringe (24, 24a) sich darin unterscheiden, dass die Außendurchmesser (d, dₐ) der Mittelabschnitte (28, 28a) unterschiedlich groß sind, wobei die diesen Zentrierringen (24, 24a) zugeordneten Gehäuseschalen (2, 4, 6) hierzu angepasste, durch wenigstens einen Anschlag (46) begrenzte radiale Anschlussabmessungen für die Mittelabschnitte (28, 28a) aufweisen.

## Claims

1. Housing shells (2, 4, 6) of mufflers, soot filters, catalytic converters or fuel tanks of vehicles, comprising a disengageable connection that connects the housing shells, **characterized in that** the disengageable connection (1, 1a) includes at least one centering ring (24, 24a) wherein two respective housing shells (2, 4) contact each other indirectly in a joining plane (22) through the at least one centering ring (24, 24a), and wherein the centering ring (24, 24a) is a separate component that is separate from the two housing shells (2, 4, 6), wherein the centering ring includes an inner centering collar (26, 26a) that is configured to contact a radially inner circumferential surface of an end of a first housing shell (2, 4, 6), a center section (28, 28a) that is arranged between face surfaces of ends of the housing shells (24, 26) and an outer centering collar (30) configured to contact a radially outer circumferential surface of an end of the other housing shell (2, 4, 6), wherein the outer centering collar (30) includes a circumferential recess (32, 32a) with respect to a circumference of the centering ring (24, 24a) so that the first housing shell (2, 4, 6) is movable along the joining plane (22, 22a) relative to the other housing shell (2, 4, 6) for mounting and dismounting purposes.

2. The housing shells according to claim 1, **characterized in that** the housing shells (2, 4, 6) and the centering ring (24, 24a) have a circular cross-section and the outer centering collar (30) extends at the most over half a circumference of the centering ring (24, 24a).

3. The housing shells according to claim 1 or 2, **characterized in that** the housing shell ends are additionally enveloped by a clamping device (42) on a radial outside of the housing shell ends.

4. The housing shells according to at least one of the preceding claims, **characterized in that** the center section (28, 28a) of the centering ring (24, 24a) is provided with a gasket (38, 40, 38a, 40a) on both sides wherein the gasket is configured to contact a face surface of an end of a housing shell (2, 4, 6).

5. The housing shells according to claim 4, **characterized in that** at least one housing shell end includes a fold-over or a roll-in (18, 20, 18a, 20a) that extends at least along a partial circle.

6. The housing shells according to claim 5, **characterized in that** the center section (28, 28a) of the centering ring (24, 24a) extends essentially in the joining plane (22, 22a) of the housing shells (2, 4, 6) and contacts the fold-overs or roll-ins (18, 20) in lines.

7. The housing shells according to claim 6, **characterized in that** enveloping walls of the housing shells (2, 4, 6) are at least partially configured double-walled and include two walls that extend at a distance from each other essentially parallel to each other, wherein an inner wall (14) of at least one housing shell (2, 4, 6) includes an inward protruding roll-in or fold-over (18) at a housing shell end, wherein the inward protruding roll-in or fold-over contacts an outer wall (16).

8. The housing shells according to claim 7, **characterized in that** the outer wall (16) of at least one housing shell (2, 4, 6) is provided with an outward protruding fold-over or roll-in (20).

9. The housing shells according to claim 8, **characterized in that** the gaskets (38, 40) are arranged between the outward protruding roll-ins or fold-overs (20) of the outer walls (16) of the housing shells (2, 4).

10. The housing shells according to claim 9, **characterized in that** the outward protruding fold-overs or roll-ins (20) of the outer walls (16) are clamped against each other by an overreaching clamping device (42) with a frustum-shaped cross-section.

11. The housing shells according to one of the preceding claims, **characterized in that** a centering ring (24, 24a) is arranged between two respective housing shells (2 and 4, 4 and 6) when there are plural housing shells (2, 4, 6), wherein a rotation position of the centering rings (24, 24a) is arranged so that their circumferential recesses (32, 32a) are essentially aligned with each other in the axial direction.

12. The housing shells according to claim 11, **characterized in that** at least a few of the centering rings (24, 24a) have geometric dimensions that differ from each other and correspond to different geometric connecting dimensions of ends of the respectively associated housing shells (2, 4, 6).

13. The housing shells according to claim 12, **characterized in that** at least some of the centering rings (24, 24a) differ **in that** their inner centering collars (26, 26a) have a different length (l₁, l₂) in the axial direction wherein housing shells (2, 4, 6) associated with the centering rings (24, 24a) have adapted axial connecting dimensions for the inner centering collars (26, 26a) wherein the axial connecting dimensions are defined by at least one stop (50, 50a).

14. The housing shells according to claim 12 or 13, **characterized in that** at least some of the centering rings (24, 24a) differ **in that** the outside diameters (d, dₐ) of the center sections (28, 28a) have different sizes wherein housing shells (2, 4, 6) that are adapted thereto and associated with the centering rings (24, 24a) have radial connecting dimensions for the center sections (28, 28a) that are defined by at least one stop (46).

## Revendications

1. Coques de boîtier (2, 4, 6) de silencieux, filtres à suie, catalyseurs ou de réservoirs de carburant de véhicules, avec une jonction amovible qui les relie, **caractérisées en ce que** la jonction amovible (1, 1a) contient au moins un anneau de centrage (24, 24a), deux coques de boîtier ayant respectivement contact indirect l'une avec l'autre dans un plan d'assemblage (22) par l'intermédiaire de l'anneau de centrage (24, 24a) et l'anneau de centrage (24, 24a) constituant un composant distinct, séparé des deux coques de boîtier (2, 4, 6), qui comprend une collerette de centrage intérieure (26, 26a) prévue pour l'appui sur une surface circonférentielle radiale intérieure de l'extrémité de l'une des coques de boîtier (2, 4, 6), une section centrale (28, 28a) placée entre les faces frontales des extrémités des coques de boîtier (2, 4, 6) ainsi qu'une collerette de centrage extérieure (30) prévue pour l'appui sur la surface circonférentielle radiale extérieure de l'autre coque de boîtier (2, 4, 6), cependant que la collerette de centrage extérieure (30) par rapport à la périphérie de l'anneau de centrage (24, 24a) présente un évidement périphérique tel qu'il est mobile le long du plan d'assemblage (22, 22a) par rapport à l'autre coque de boîtier (2, 4, 6) à des fins de montage et de démontage.

2. Coques de boîtier selon la revendication 1, **caractérisées en ce que** les coques de boîtier (2, 4, 6) et l'anneau de centrage (24, 24a) présentent une section circulaire et que la collerette de centrage extérieure (30) s'étend jusqu'au maximum la moitié de la circonférence de l'anneau de centrage (24, 24a).

3. Coques de boîtier selon la revendication 1 ou 2, **caractérisées en ce que** les extrémités des coques de boîtier sont recouvertes radialement à l'extérieur en plus par un moyen de serrage (42).

4. Coques de boîtier selon au moins l'une des revendications précédentes, **caractérisées en ce que** la section centrale (28, 28a) de l'anneau de centrage (24, 24a) est pourvue des deux côtés d'une étanchéité (38, 40, 38a, 40a) prévue pour l'appui sur une face frontale d'une extrémité d'une coque de boîtier (2, 4, 6).

5. Coques de boîtier selon la revendication 4, **caractérisées en ce qu'**au moins une extrémité de coque de boîtier présente un bord rabattu ou un enroulement (18, 20, 18a, 20a) qui décrit un cercle partiel.

6. Coques de boîtier selon la revendication 5, **caractérisées en ce que** la section centrale (28, 28a) de l'anneau de centrage (24, 24a) s'étend substantiellement dans le plan d'assemblage (22, 22a) des coques de boîtier (2, 4, 6) et est en contact est en contact à la manière d'une ligne avec les bords rabattus ou les enroulements (18, 20).

7. Coques de boîtier selon la revendication 6, **caractérisées en ce que** les parois de l'enveloppe des coques de boîtier (2, 4, 6) sont configurées chacune au moins partiellement à double paroi et présentent deux parois qui s'étendent substantiellement parallèlement l'une à l'autre, cependant qu'une paroi intérieure (14) d'au moins l'une des coques de boîtier (2, 4, 6) présente, à l'extrémité de la coque de boîtier, un bord rabattu ou un enroulement (18) qui est en contact avec une paroi extérieure (16).

8. Coques de boîtier selon la revendication 7, **caractérisées en ce que** la paroi extérieure (16) d'au moins une coque de boîtier (2, 4, 6) est pourvue d'un bord rabattu ou d'un enroulement qui fait saillie vers l'extérieur.

9. Coques de boîtier selon la revendication 8, **caractérisées en ce que** les étanchéités (38, 40) sont associées aux enroulements ou aux bords rabattus (20) qui font saillie vers l'extérieur des parois extérieures (16) des coques de boîtier (2, 4, 6).

10. Coques de boîtier selon la revendication 9, **caractérisées en ce que** les bords rabattus ou enroulements (20) qui font saillie vers l'extérieur des parois extérieures (16) serrés l'un contre l'autre par le recouvrement d'un moyen de serrage (42) avec une section en forme de cône tronqué.

11. Coques de boîtier selon l'une des revendications précédentes, **caractérisées en ce que**, pour plusieurs coques de boîtier (2, 4, 6) respectivement deux coques de boîtier (2 et 4, 4 et 6) un anneau de serrage (24, 24a) est intercalé entre respectivement deux coques de boîtier (2 et 4, 4 et 6), cependant que la position de rotation des anneaux de centrage (24, 24a) est telle que leurs évidements périphériques (32, 32a) sont sensiblement alignés l'un avec l'autre dans le sens axial.

12. Coques de boîtier selon la revendication 11, **caractérisées en ce qu'**au moins quelques-uns des anneaux de centrage (24, 24a) présentent des dimensions géométriques différentes les uns des autres, lesquelles dimensions différentes correspondent à des dimensions de raccord des extrémités des coques de boîtier (2, 4, 6) respectivement associées.

13. Coques de boîtier selon la revendication 12, **caractérisées en ce qu'**au moins quelques-uns des anneaux de centrage (24, 24a) diffèrent **en ce que** leurs collerettes intérieures de centrage (26, 26a) ont une longueur différente (I₁, I₂), ceci étant vu dans le sens axial, cependant que les coques de boîtier (2, 4, 6) associées à ces anneaux de centrage (24, 24a) présentent des dimensions de raccord axiales adaptées limitées par au moins une butée (50, 50a) pour les collerettes intérieures de centrage (26, 26a).

14. Coques de boîtier selon la revendication 12 ou 13, **caractérisées en ce qu'**au moins quelques-uns des anneaux de centrage (24, 24a) diffèrent **en ce que** les diamètres extérieurs (d, d₁) des sections centrales (28, 28a) sont de différentes grandeurs, cependant que les coques de boîtier (2, 4, 6) associées à ces anneaux de centrage (24, 24a) présentent des dimensions de raccord radiales adaptées limitées par au moins une butée (46) pour les sections centrales (28, 28a).
